# EUROPEAN PATENT SPECIFICATION

(11) **EP 4 126 686 B1**
(45) Date of publication and mention of the grant of the patent: **20.03.2024**
(21) Application number: 20750770.8
(22) Date of filing: 05.08.2020
(51) Int. Cl.: B65D 41/04, B65D 53/00

(54) **CAP WITH PVC-FREE SEAL**
KAPPE MIT PVC-FREIER DICHTUNG
CAPUCHON AVEC JOINT SANS PVC

(30) Priority: 27.03.2020 IT 202000006490
(43) Date of publication of application: 08.02.2023
(73) Proprietor: TECNOCAP SPA, 84013 Cava De' Tirreni (SA) (IT)
(72) Inventor: COCCORESE, Marco, 84126 Salerno (IT)
(74) Representative: Corradini, Corrado
(86) International application number: PCT/IB2020/057381
(87) International publication number: WO 2021/191667

(56) References cited:
- EP-A1- 1 645 519
- EP-A1- 1 739 127
- EP-A2- 1 932 863
- WO-A1-2013/170539
- CA-C- 1 316 143
- US-A1- 2010 010 171

## Description

### Technical Field

The present invention relates to the field of metal caps which are commonly used to hermetically close containers, typically in the context of the packaging of commercial products, such as for example food, cosmetic, pharmaceutical products or else. More particularly, the present invention relates to caps adapted to be screwed or otherwise applied and fixed to the mouth of cups, bottles, vials or any other glass, metal or plastic container which must contain the aforesaid products under a hermeticity condition, possibly after having undergone a pasteurization and/or sterilization process.

### Background

It is known that many commercial products, especially but not exclusively in the food sector, including drinks such as fruit juices, are marketed inside cups, glasses, bottles or other glass, metal or plastic containers, which are conventionally equipped with a mouth which, after filling with the product, is hermetically closed by means of a corresponding cap, usually called "foil lid", which is generally made of metal and/or plastic.

These caps can be of multiple types, for example caps adapted to be screwed onto the mouth of the container, including "screw closures", "twist caps", "lug caps", "continuous threading (CT) caps", or caps to be applied to the mouth of container by pressing or snap-fitting, for example "press-on twist-off (PT) caps", "snap caps" and others.

To ensure the hermeticity of the closure, all these caps are commonly equipped with a seal, typically of an annular shape, which can be inseparably joined to the cap and conventionally consists of a polymer-based sealing material.

This sealing material, which is generally formed by a composition comprising at least one polymer mixed with other substances, such as for example lubricants, stabilizers, pigments or other additives, must be able to satisfy multiple requirements.

For example, the sealing material of the seal must be able to be thermally softened sufficiently to be applied to the cap by extrusion and/or other suitable industrial processes, possibly followed or accompanied by mechanical shaping operations aimed at giving it the desired shape, such as for example molding, compression molding or injection molding.

After application and subsequent cooling, the sealing material of the seal must also as-some a solid state, more or less deformable and elastic, capable of maintaining the imposed shape and be able to sometimes resist any thermal pasteurization and/or sterilization treatments, often under overpressure conditions.

Especially in the case of screwable caps, the sealing material of the seal must also have a sufficiently low adhesion coefficient with the mouth of the container so as to allow a relatively simple screwing/unscrewing of the cap, avoiding that the seal adheres excessively or sticks to the mouth of the container.

At the same time, the sealing material of the seal must guarantee an effective sealing effect for the entire commercial life of the packaged product, acting as a barrier that prevents the infiltration of unwanted substances from the outside and product leakages to the outside, for example of liquid products such as drinks, and which sometimes allow to maintain special internal storage conditions, for example vacuum and/or controlled atmosphere conditions.

To meet all these needs, the most conventionally used seals in the caps outlined above consist of a polyvinyl chloride (PVC) -based sealing material.

The current trend in the packaging sector, especially in the food packaging sector, is however to eliminate the use of PVC for multiple reasons.

A first reason consists in the fact that, during disposal, especially in the case of incineration, PVC releases acid gases that are polluting and that can be harmful to health. Another reason consists in the fact that, in order to make seals, the PVC-based sealing material must generally be supplemented with plasticizers which, under certain conditions, can migrate from the seal to the food product inside the container, with resulting potential harmful effects for the consumers' health.

CA 1 316 143 C discloses a bottle crown comprising a cap with a seal (liner) which is formed from a thermoplastic polyurethane elastomer. The cap is made from metal.

EP 1 739 127 A1 discloses articles for sealing containers which comprise a thermoplastic vulcanizate including a cured butyl rubber, a TPU and a synthetic oil. A metal band can be positioned around the container.

WO 2013/170539 A1 discloses hollow vessels with a sealing cap comprising a sealing layer which can comprise a TPU and a TPO.

US 2010/010171 A1 discloses block copolymer compositions comprising a thermoplastic polyurethane elastomer which can be used to manufacture a seal for a cap.

EP 1 645 519 A1 discloses bottle caps which include a base cap comprising a sealing material (gasket) which comprises a thermoplastic elastomer material.

EP 1 932 863 A2 discloses TPU compositions for the manufacture of grip caps, sealing components and dust caps.

### Disclosure of the invention

In light of the above, an object of the present invention is to make available a closing cap for containers, which is equipped with a seal that can overcome the drawbacks due to the presence of PVC.

Another object is that of achieving the mentioned objective within the context of a simple, rational and relatively cost-effective solution.

These objects are reached thanks to the characteristics of the invention as set forth in the independent claim 1. The dependent claims outline preferred and/or particularly advantageous aspects of the invention but not strictly necessary for its attainment.

In particular, the present invention makes available a cap for closing containers comprising a seal consisting of a sealing material, wherein
- the sealing material is PVC-free,
- the sealing material comprises at least one polyurethane thermoplastic elastomer. Thanks to this solution, a seal is made available which, being completely PVC-free, allows to solve all the drawbacks traditionally linked with the use of this polymeric material.

On the other hand, the use of a polyurethane thermoplastic elastomer still allows the realisation of a seal having the technical characteristics necessary to meet the requirements required in the packaging sector, in particular that of being able to guarantee an effective tightness, that of being easily workable by industrial processes and that of not sticking or excessively adhering to the containers.

According to an aspect of the invention, the sealing material can have a Shore A hardness comprised between 60 and 95, preferably between 75 and 90 (extremes included).

Thanks to these hardness values it is advantageously possible to obtain a seal that allows obtaining an effective tightness on the mouth of the containers, without generating excessive adhesion/sticking phenomena that might compromise the opening thereof, and at the same time ensure a good tightness when closing.

According to another aspect of the invention, the sealing material can have a density comprised between 1.1 and 1.2 g/cm³ (DIN 53479), whereby the extremes are included.

This feature is particularly useful in the product packaging phase even at room temperature, when it is sometimes required to be able to guarantee the tightness of vacuum and avoid the leakage of the preservative liquid/product even before the pasteurization or sterilization heat treatment, with which the seal will then assume the final shape, "reproducing itself" on the mouth of the receptacle

A further aspect of the invention provides that the sealing material can have a VICAT softening temperature comprised between 80 ° C and 90 ° C (ISO 306), whereby the extremes are included.

Thanks to this solution, the sealing material can be effectively used to make the tightening seal by means of usual extrusion, thermoforming, compression molding, injection molding processes or other suitable industrial processes which require the softening of the material.

According to another aspect of the invention, the seal can be pasteurized up to temperatures equal to 100°C, i.e. it can be subjected, generally together with the container and the product contained therein, to a pasteurization process up to a temperature of 100°C without melting or undergoing damage that compromises its integrity and functionality. The seal can also be sterilized up to temperatures equal to 125°C and, more preferably, up to temperatures equal to 132°C, i.e. it can be subjected to a sterilization process up to these temperature values, without melting or undergoing damage which compromise its integrity and functionality.

These aspects of the invention allow the fact that the caps equipped with this seal can be used reliably in the packaging of products that require this type of treatment.

According to a different aspect of the invention, the polyurethane thermoplastic elastomer can be contained in the sealing material in a percentage by weight comprised between 70% and 96% of the overall weight of the sealing material (extremes included).

This quantity of polyurethane thermoplastic elastomer allows obtaining a particularly effective and reliable seal.

According to the invention, the sealing material comprises a second thermoplastic elastomer different from the aforesaid polyurethane thermoplastic elastomer, which is a styrene-type thermoplastic elastomer.

The addition of this second thermoplastic elastomer, generally in a lower quantity than the polyurethane one, can be useful, for example, when a seal with a resistance to temperatures higher than 125°C, and up to 132°C and/or a seal that is able to resist back pressures higher than 4 bar in the sterilization cycles is desired.

By way of example, the second thermoplastic elastomer can be contained in the sealing material in a percentage by weight comprised between 5% and 40% of the overall weight of the sealing material.

This quantity of the second thermoplastic elastomer allows to maximize the effects produced by it, without compromising those attributable to the use of the polyurethane thermoplastic elastomer.

Possibly, the sealing material may also comprise one or more further additives selected from the group consisting of: lubricants, stabilizers, pigments and filler, as long as they are not liquids.

The addition of these substances, generally in rather small or in any case minority quantities with respect to the polyurethane thermoplastic elastomer and to the second thermoplastic elastomer, has the effect of improving the chemical/physical qualities of the seal.

Another aspect of the invention provides that the sealing material may be free of plasticizers, for example of phthalates.

The absence of plasticizers, which normally have the contraindication of migrating inside some products, especially of a food nature, has the advantage of reducing the risks for the consumers' health.

Again in order to reduce the risk of product contamination, the sealing material is free of liquids, i.e. of substances that are liquid at room temperature or in any case at the temperature of use of the seal (e.g. diluting oils).

For the same reasons, the sealing material is also preferably free of any substance that has been identified as harmful to health, including for example ADC, OBSH, and 2-ethylhexanoic acid.

### Detailed description

A cap according to the present invention can be any cap made of metal and adapted to close the mouth of a container.

The container can be a cup, a glass, a bottle, a vial or any other container that is equipped with a mouth, through which a product can be placed inside the container and/or can flow out of it.

The container can be made of glass, metal, plastic or any other material deemed suitable for packaging and storing the product with which it is filled.

The product is normally a food product, also including drinks such as fruit juices, soft drinks and alcoholic beverages or else, but it could also be a cosmetic product, a pharmaceutical product or, more generally, any commercial product that should be packed inside a container.

The cap, also commonly called foil lid, can be of different types depending on the type of coupling it is achieved with the mouth of the container.

For example, the cap can be of the type suitable for being coupled to the mouth of the container by means of a partial or complete threading which can be obtained in the mouth and/or in the cap itself, so that, after filling the container with the product to be packaged and closing the mouth, the cap can be subsequently removed by unscrewing.

Within this category, the cap can be of the type in which the closure of the container takes place by screwing the cap onto the mouth, such as for example "screw closures", "twist caps", "lug caps", "continuous threading (CT) caps", or of the type in which the closure takes place by pressing or in another way, such as for example "press-on twist-off (PT) caps".

In other embodiments, the cap could be of the types that do not include threading, such as for example "snap caps", hook caps, crimp caps and others.

The cap is made of metal.

A seal, typically of an annular shape, is generally applied to the cap, which seal is adapted to be compressed between the cap and the mouth of the container, so as to act as a barrier which prevents the infiltration of unwanted substances from the outside and/or product leakage to the outside, especially if the products are liquids such as for example drinks.

In some cases, the seal can also act as a hermetic tightness and possibly be able to maintain special internal conditions of preservation of the product, including, for example, vacuum and/or controlled atmosphere conditions.

Some applications may also provide that the seal must be able to withstand possible sterilization treatments and/or pasteurization treatments of the product that can be performed after filling and closing the container, which generally involve heating the seal up to high temperatures and/or pressures.

At these high temperatures and pressures, it is therefore preferable that the seal cannot melt or be damaged and possibly that it is able to maintain its tightness characteristics. At the same time, the seal must not adhere excessively or stick to the mouth of the container, in order to allow a rather simple removal of the cap, for example the unscrewing thereof, when the container must be opened.

To meet these and/or other needs, the seal can consist of a sealing material of a polymeric nature, i.e. of a material which comprises at least one polymeric component, possibly mixed with other substances and additives to form a compound or mixture.

The sealing material can be of the type suitable for being made fluid or thermally softened, typically by heating, for example so as to give it the shape of the seal, and for solidifying to maintain the shape thus obtained, following a subsequent cooling.

In this way, the sealing material, after being softened or made sufficiently fluid, can be applied directly to the cap, typically to the internal surface of the same, by means of an extrusion process or another similar technological process that can be carried out at the area of the cap in which the seal is to be made.

Once applied to the cap, the sealing material can possibly be subjected to a mechanical shaping, for example by means of a compression molding process, so as to give it the shape of the seal to be made.

After cooling, the sealing material can therefore assume a solid consistency which allows it to maintain its shape and which allows it, after application of the cap to the container, to exert its function as a seal.

However, it is not excluded that, in other embodiments, the sealing material can be used to make the seal as a separate element and outside the cap, for example by means of an extrusion, injection molding or thermoforming process, and then be applied as a finished seal to the cap, for example inserted inside a special seat obtained therein.

Also in this case, the sealing material must in any case be suitable to soften or become sufficiently fluid, following an appropriate heating, to be subjected to the aforesaid forming processes, and to solidify, maintaining the acquired shape, following subsequent cooling. According to the present invention, the sealing material which constitutes the seal is free of polyvinyl chloride (PVC).

It is desired to specify herein that, in the context of this discussion, when it is said that the sealing material is free of a substance (e.g. PVC) it means that the sealing material is completely free of that substance, i.e. that there is no trace of that substance in it.

According to the invention, the sealing material comprises a polyurethane thermoplastic elastomer.

This polyurethane thermoplastic elastomer can be contained in the sealing material in a percentage by weight comprised between 70% and 96% of the overall weight of the sealing material (extremes included).

The polyurethane thermoplastic elastomer can be obtained by combining, for example by polyaddition, a polyfunctional isocyanate, for example a diisocyanate, with one or more polyols (or long chain diols) and, possibly, with other additives, such as for example one or more short chain diols and/or chain extenders.

The polyfunctional isocyanate is generally an organic substance whose molecule contains two or more isocyanate(-NCO) groups. An organic substance whose molecule contains two isocyanate groups is conventionally called diisocyanate.

The polyfunctional isocyanate, for example diisocyanate, can be aliphatic, cycloaliphatic, polycyclic or aromatic.

In particular, the polyfunctional isocyanate can be a diisocyanate selected from the group consisting of: diphenylmethane diisocyanate (MDI), toluene diisocyanate (TDI) and xylene diisocyanate (XDI).

Each of the polyols present in the thermoplastic elastomer can be selected from the group consisting of: a polyether, a polyester and a polycaprolactone.

According to the invention, the sealing material which constitutes the seal comprises a second thermoplastic elastomer, which is different from the first polyurethane thermoplastic elastomer and is of the styrene type (SBS; SEBS).

When it is necessary to have a greater elastic nature of the finished seal, especially if subjected to temperatures higher than 125°C and back pressures in a closed environment higher than 4bar, then a styrene thermoplastic elastomer will increase the necessary mechanical characteristics, for example thanks to its glassy transition properties of -90°C (i.e. 90° below zero), Shore hardness equal to 13 A and a density between 0.89 and 1.20 g/cm3

The second thermoplastic elastomer can be contained in the sealing material in a percentage by weight comprised between 5% and 40% of the overall weight of the sealing material, for example comprised between 5% and 25%.

The sealing material can optionally also comprise other additives selected from the group consisting of: lubricants, stabilizers, pigments and fillers, as long as they are not liquids.

The lubricants are used to reduce the adhesion of the seal on the material that constitutes the mouth of the container, so as to facilitate the opening and closing of the same, and can for example be selected from the group consisting of micronized amide and polyethylene waxes

The stabilizers are used to stabilize the material at temperatures and degradation by UV rays and oxidation and can for example be selected from the group consisting of Ca and Zn Salts

The pigments are used to give the seal a predetermined colouring and can for example be selected from the group consisting of Titanium dioxide.

Each of these additives can be present in the sealing material in smaller proportions by weight than the first polyurethane thermoplastic elastomer and the second thermoplastic elastomer, for example less than or equal to 5% of the overall weight of the sealing material, more preferably less or equal to 1% of the overall weight of the sealing material. Since the seal can come into contact with the product packaged in the container, which can be of a food nature, it is also preferable that the sealing material of which the seal is made up is free of all those substances which, by polluting and/or migrating into the product, might be dangerous to health.

Thus, for example, it is preferable that the sealing material be free of plasticizers, such as for example phthalates and adipates.

According to the invention, the sealing material is free of liquids, i.e. of substances that are liquid at room temperature or in any case at the temperature of normal use of the seal, for example plasticizers of any nature - either polar or apolar - and of any molecular weight, and in general of fat-soluble diluting oils.

For the same reasons, the sealing material is preferably free of substances including, for example, ADC, OBSH, 2-ethylhexanoic acid.

Regardless of these considerations, it is preferable that the composition and/or the manufacturing methods of the sealing material are selected in such a way that the same, after solidification in the form of a seal, has one or more of the following physical characteristics:
- Shore A hardness comprised between 60 and 95 (extremes included), more preferably comprised between 75 and 90 (extremes included);
- density comprised between 1.1 and 1.2 g/cm³ (DIN 53479) (extremes included);
- VICAT softening temperature comprised between 80°C and 90°C (ISO 306) (extremes included).

It is also preferable that the seal obtained with said sealing material can withstand sterilization processes and/or pasteurization processes to which the product can be subjected inside the container after closing the cap.

The term "withstand" means that the seal, being subjected to these processes, must not melt, break, be damaged, nor lose its effectiveness.

In particular, it is preferable that the seal can withstand sterilization processes which involve heating it up to a temperature of 100°C (extreme included).

It is also preferable that the seal can withstand pasteurization processes which involve heating it up to a temperature of 125°C (extreme included) and, more preferably, up to a temperature of 132°C (extreme included).

In the case of pasteurization it is also possible that this process is carried out in a pressurized environment, in which case the seal must preferably be able to also resist the action of pressure, without compromising the hermetic closure of the container.

According to the invention, the sealing material of the seal comprises two or more different polymers and that these polymers include the above mentioned first polyurethane thermoplastic elastomer and the above mentioned second thermoplastic elastomer, which is a styrene-type thermoplastic elastomer.

In this case, the composition of the sealing material is as follows:
- a polyurethane thermoplastic elastomer;
- at least a second thermoplastic elastomer different from said polyurethane thermoplastic elastomer, which is a styrene-type thermoplastic elastomer.
- optionally at least one lubricant;
- optionally at least one stabilizer;
- optionally at least one pigment;
- optionally at least one filler.

By way of example, a specific example of this sealing material can be as follows:

| | | |
|---|---|---|
| - | Thermoplastic polyurethane (ether or ester base) | (> 50% and <90%) |
| - | Olefin copolymer SEBS | (>10% and <40%) |
| - | Polyolefin elastomer | (>10% and <40%) |
| - | fatty acid ester | (<5%) |
| - | Titanium dioxide | (<5%) |

All these embodiments are however united by the fact that the sealing material is free of PVC and liquids and, preferably, also free of polyolefins and/or plasticizers and/or ADC and/or OBSH and/or 2-ethylhexanoic acid.

## Claims

1. A cap made of metal for closing containers comprising a seal consisting of a sealing material, wherein
- the sealing material is PVC-free, i.e. PVC is completely absent in the sealing material,
- the sealing material comprises at least one polyurethane thermoplastic elastomer and a second thermoplastic elastomer different from said polyurethane thermoplastic elastomer, said second thermoplastic elastomer being a styrene-type thermoplastic elastomer,
the sealing material being free of liquids, i.e. liquids are completely absent in the sealing material.

2. The cap according to claim 1, wherein the sealing material has a Shore A hardness comprised between 60 and 95 extremes included.

3. The cap according to any one of the preceding claims, wherein the sealing material has a density, measured according to DIN 53479, comprised between 1.1 and 1.2 g/cm³ extremes included.

4. The cap according to any one of the preceding claims, wherein the sealing material has a VICAT softening temperature, measured according to ISO 306, comprised between 80°C and 90°C extremes included.

5. The cap according to any one of the preceding claims, wherein the seal is pasteurizable up to temperatures equal to 100°C.

6. The cap according to any one of the preceding claims, wherein the seal is sterilizable up to temperatures equal to 132°C.

7. The cap according to any one of the preceding claims, wherein said polyurethane thermoplastic elastomer is contained in the sealing material in a percentage by weight comprised between 70% and 96% of the overall weight of the sealing material extremes included.

8. The cap according to claim 1, wherein said second thermoplastic elastomer is contained in the sealing material in a percentage by weight comprised between 5% and 40% of the overall weight of the sealing material.

9. The cap according to any one of the preceding claims, wherein the sealing material comprises one or more additives selected from the group consisting of: non-liquid lubricants, stabilizers, pigments and fillers.

10. The cap according to any one of the preceding claims, wherein the sealing material is free of plasticizers, i.e. plasticizers are completely absent in the sealing material.

## Patentansprüche

1. Deckel, gefertigt aus Metall, zum Verschließen von Behältern, umfassend eine Dichtung, die aus einem Dichtungsmaterial besteht, wobei
- das Dichtungsmaterial PVC-frei ist, das heißt, in dem Dichtungsmaterial ist absolut kein PVC vorhanden,
- das Dichtungsmaterial mindestens ein thermoplastisches Polyurethan-Elastomer und ein zweites thermoplastisches Elastomer umfasst, das von dem thermoplastischen Polyurethan-Elastomer verschieden ist, wobei das zweite thermoplastische Elastomer ein thermoplastisches Elastomer vom Typ Styrol ist,
das Dichtungsmaterial frei von Flüssigkeiten ist, das heißt, in dem Dichtungsmaterial sind absolut keine Flüssigkeiten vorhanden.

2. Deckel nach Anspruch 1, wobei das Dichtungsmaterial eine Härte Shore A zwischen jeweils einschließlich 60 und 95 aufweist.

3. Deckel nach einem der vorherigen Ansprüche, wobei das Dichtungsmaterial eine Dichte, gemessen nach DIN 53479, zwischen jeweils einschließlich 1,1 und 1,2 g/cm³ aufweist.

4. Deckel nach einem der vorherigen Ansprüche, wobei das Dichtungsmaterial eine VICAT-Erweichungstemperatur, gemessen nach ISO 306, zwischen jeweils einschließlich 80 °C und 90 °C aufweist.

5. Deckel nach einem der vorherigen Ansprüche, wobei die Dichtung bis zu Temperaturen von 100 °C pasteurisierbar ist.

6. Deckel nach einem der vorherigen Ansprüche, wobei die Dichtung bis zu Temperaturen von 132 °C sterilisierbar ist.

7. Deckel nach einem der vorherigen Ansprüche, wobei das thermoplastische Polyurethan-Elastomer in dem Dichtungsmaterial in einem Prozentsatz nach Gewicht zwischen jeweils einschließlich 70 % und 96 % des Gesamtgewichts des Dichtungsmaterials enthalten ist.

8. Deckel nach Anspruch 1, wobei das zweite thermoplastische Elastomer in dem Dichtungsmaterial in einem Prozentsatz nach Gewicht zwischen 5 % und 40 % des Gesamtgewichts des Dichtungsmaterials enthalten ist.

9. Deckel nach einem der vorherigen Ansprüche, wobei das Dichtungsmaterial ein oder mehrere Additive umfasst, die ausgewählt sind aus der Gruppe, bestehend aus Folgenden: nichtflüssigen Schmiermitteln, Stabilisatoren, Pigmenten und Füllstoffen.

10. Deckel nach einem der vorherigen Ansprüche, wobei das Dichtungsmaterial frei von Weichmachern ist, das heißt, in dem Dichtungsmaterial sind absolut keine Weichmacher vorhanden.

## Revendications

1. Bouchon en métal permettant de fermer des récipients, comprenant un joint constitué d'un matériau d'étanchéité, dans lequel
- le matériau d'étanchéité est exempt de PVC, c'est-à-dire que le PVC est totalement absent du matériau d'étanchéité,
- le matériau d'étanchéité comprend au moins un élastomère thermoplastique de polyuréthane et un deuxième élastomère thermoplastique différent dudit élastomère thermoplastique de polyuréthane, ledit deuxième élastomère thermoplastique étant un élastomère thermoplastique de type styrène,
le matériau d'étanchéité étant exempt de liquides, c'est-à-dire que les liquides sont totalement absents du matériau d'étanchéité.

2. Bouchon selon la revendication 1, dans lequel le matériau d'étanchéité a une dureté Shore A comprise entre 60 et 95 extrêmes inclus.

3. Bouchon selon l'une quelconque des revendications précédentes, dans lequel le matériau d'étanchéité a une densité, mesurée selon la norme DIN 53479, comprise entre 1,1 et 1,2 g/cm³ extrêmes inclus.

4. Bouchon selon l'une quelconque des revendications précédentes, dans lequel le matériau d'étanchéité a une température de ramollissement VICAT, mesurée selon la norme ISO 306, comprise entre les extrêmes 80°C et 90°C inclus.

5. Bouchon selon l'une des revendications précédentes, dans lequel le joint est pasteurisable jusqu'à des températures égales à 100°C.

6. Bouchon selon l'une des revendications précédentes, dans lequel le joint est stérilisable jusqu'à des températures égales à 132°C.

7. Bouchon selon l'une quelconque des revendications précédentes, dans lequel ledit élastomère thermoplastique de polyuréthane est contenu dans le matériau d'étanchéité dans un pourcentage en poids compris entre 70% et 96% du poids total du matériau d'étanchéité inclus à l'extrême.

8. Bouchon selon la revendication 1, dans lequel le deuxième élastomère thermoplastique est contenu dans le matériau d'étanchéité dans un pourcentage en poids compris entre 5 % et 40 % du poids total du matériau d'étanchéité.

9. Bouchon selon l'une quelconque des revendications précédentes, dans lequel le matériau d'étanchéité comprend un ou plusieurs additifs choisis dans le groupe constitué par les lubrifiants non liquides, les stabilisateurs, les pigments et les matériaux de remplissage.

10. Bouchon selon l'une quelconque des revendications précédentes, dans lequel le matériau d'étanchéité est exempt de plastifiants, c'est-à-dire que les plastifiants sont totalement absents du matériau d'étanchéité.
